# FASCICULE DE BREVET EUROPEEN

(11) **EP 4 199 278 B1**
(45) Date de publication et mention de la délivrance du brevet: **24.07.2024**
(21) Numéro de dépôt: 22213382.9
(22) Date de dépôt: 14.12.2022
(51) Int. Cl.: H02B 1/28

(54) **JOINT D'ÉTANCHÉITÉ ET COFFRET ÉLECTRIQUE À DOUBLE-PORTE COMPRENANT DEUX TELS JOINTS D'ÉTANCHÉITÉ**
DICHTUNG UND ELEKTRISCHER DOPPELTÜRKASTEN MIT ZWEI SOLCHEN DICHTUNGEN
SEALING GASKET AND DOUBLE-DOOR ELECTRICAL BOX COMPRISING TWO SUCH SEALING GASKETS

(30) Priorité: 15.12.2021 FR 2113568
(43) Date de publication de la demande: 21.06.2023
(73) Titulaire: SCHNEIDER ELECTRIC INDUSTRIES SAS, 92500 Rueil-Malmaison (FR)
(72) Inventeur: GUINEBERT, Patrick, 67260 SILTZHEIM (FR)
(74) Mandataire: Lavoix

(56) Documents cités:
- DE-C1- 19 736 791
- US-A1- 2021 026 090

## Description

La présente invention concerne un joint d'étanchéité et un coffret électrique à double-porte comprenant deux tels joints d'étanchéité.

Dans le domaine des équipements industriels, il est connu d'équiper des coffrets électriques à double-porte avec des équipements électriques. De tels coffrets comprennent un caisson, une contre-porte et une porte. Généralement, la contre-porte présente une feuillure contre laquelle la porte prend appui lorsque le coffret est refermé, et le caisson présente une gouttière, qui s'étend sur toute sa périphérie. Pour protéger l'intérieur du coffret électrique des projections d'eau pouvant survenir autour de la contre-porte et autour de la porte, ces coffrets comprennent également des joints périphériques, qui s'étendent autour de la contre-porte et de la porte. Ces joints périphériques ne sont généralement pas suffisant pour assurer l'étanchéité des coffrets, et au niveau des deux jonctions entre le caisson, la contre-porte et la porte, c'est-à-dire aux deux extrémités de la feuillure de la contre-porte.

Ainsi, pour améliorer l'étanchéité aux projections d'eau de tels coffrets électriques à double-porte, il est connu de disposer des joints d'étanchéité aux deux jonctions entre le caisson, la contre-porte et la porte. Ces joints d'étanchéité sont généralement fixés à la gouttière du caisson, et sont écrasés par la contre-porte lorsque celle-ci est refermée sur le caisson, de sorte à obstruer ces deux jonctions. Cependant, de tels joints d'étanchéité complexifient la fermeture du coffret électrique, car leur écrasement nécessite un effort de compression important lorsque la contre-porte est refermée sur le caisson. De plus, ces joints d'étanchéité ne présentent pas des performances satisfaisantes, et n'empêchent pas toutes les projections d'eau de pénétrer dans le coffret, aux jonctions entre le caisson, la contre-porte et la porte.

Par ailleurs, de tels coffrets électriques à double-porte sont généralement réalisés à l'aide de tôles fines, afin de diminuer leur coût de fabrication. L'utilisation de telles tôles conduit néanmoins à obtenir une contre-porte et une porte risquant de s'affaisser sous leur propre-poids. Cet effet est particulièrement ressenti pour des coffrets électriques à double-porte de grandes dimensions, comme par exemple les coffrets mesurant plus d'un mètre de hauteur. Afin d'éviter cet affaissement et pour garantir un bon positionnement de la porte et de la contre-porte par rapport au caisson, il est connu de recourir à des pions de centrage, fixés à une gouttière du caisson, qui guident la contre-porte et la porte lors de leur fermeture, afin de les positionner par rapport au caisson. Cependant, de tels pions de centrage présentent l'inconvénient de complexifier la fabrication des coffrets électriques, et ne sont pas pleinement satisfaisants.

DE 197 36 791 C1 décrit un coffret électrique comprenant un caisson, une porte et une contre-porte, ainsi qu'un joint d'étanchéité disposé dans une encoche de la porte et de la contre-porte. Le joint d'étanchéité est fixé à une feuillure de la contre-porte. Cependant, ce joint d'étanchéité ne permet pas un bon positionnement de la porte et de la contre-porte par rapport au caisson.

US 2021/026090 A1 décrit une armoire comportant un caisson, une porte et une contre-porte. Un support 14 permet d'assembler une armature du caisson et permet d'étanchéifier la liaison entre le caisson, la porte et la contre-porte. Cependant, ce support est complexe à réaliser, et donc onéreux, et ne permet pas un bon positionnement de la porte et de la contre-porte par rapport au caisson.

C'est à ces inconvénients qu'entend plus particulièrement remédier l'invention, en proposant un nouveau joint d'étanchéité permettant à la fois d'étanchéifier les jonctions entre le caisson, la contre-porte et la porte d'un coffret électrique, et de positionner la contre-porte et la porte par rapport au caisson, tout en étant peu cher à fabriquer.

À cet effet, l'invention concerne un joint d'étanchéité monobloc et monomatière pour un coffret électrique à double-porte, destiné à étanchéifier une jonction entre un caisson, une contre-porte et une porte du coffret électrique, comprenant :
- une base de positionnement, comportant :
   ∘ une embase en forme de cylindre droit non-circulaire s'étendant selon un axe vertical, une surface interne de l'embase étant concave, l'embase étant configurée pour être fixée sur une feuillure de la contre-porte du coffret, de sorte que l'embase coopère par complémentarité de formes avec une partie convexe de la feuillure, et
   ∘ un tenon, comportant deux cales de positionnement s'étendant parallèlement l'une à l'autre dans deux plans longitudinaux parallèles à l'axe vertical, et une rainure formée entre les deux cales de positionnement, la rainure étant configurée pour recevoir un bord d'une encoche ménagée dans un rebord de la contre-porte, la rainure étant configurée pour être de forme complémentaire à une forme de l'encoche ; et
- un guide allongé, s'étendant selon un axe horizontal perpendiculaire à l'axe vertical et aux plans longitudinaux en traversant le tenon, et formant une gorge, configurée pour recevoir une gouttière du caisson, la gouttière étant en appui contre le guide allongé, de sorte à positionner le joint d'étanchéité selon l'axe vertical par rapport à la gouttière, et de sorte à assurer une étanchéité entre le joint d'étanchéité et la gouttière.

Grâce à l'invention, le joint est fixé avec précision à la contre-porte d'un caisson électrique à double-porte, à l'aide de la base de positionnement, ce qui permet de réduire l'effort de fermeture de la contre-porte. En outre, les saillies d'étanchéité et la gorge permettent d'étanchéifier de manière efficace les jonctions entre le caisson, la contre-porte et la porte du coffret électrique. La gorge permet également de positionner verticalement le joint d'étanchéité, et donc la contre-porte, par rapport au caisson, ce qui évite de recourir à des pions de centrage.

Selon des aspects avantageux, mais non obligatoires de l'invention, le joint d'étanchéité incorpore une ou plusieurs des caractéristiques suivantes, prises isolément ou selon toutes combinaisons techniquement admissibles :
- Le joint d'étanchéité comprend deux saillies d'étanchéité disposées de part et d'autre du tenon, selon l'axe horizontal, une première saillie d'étanchéité étant configurée pour être en appui contre la contre-porte, de sorte à assurer une étanchéité entre le joint d'étanchéité et la contre-porte, la deuxième saillie d'étanchéité étant configurée pour être en appui contre la porte, de sorte à assurer une étanchéité entre le joint d'étanchéité et la porte, et, de préférence, la deuxième saillie d'étanchéité comprend au moins une lèvre configurée pour être écrasée contre la porte.
- La première saillie d'étanchéité comprend un congé, configuré pour être en appui contre un joint périphérique de la contre-porte, la deuxième saillie d'étanchéité comprend un congé, configuré pour être en appui contre un joint périphérique de la porte, et le guide allongé présente deux parties latérales, chaque partie latérale étant configurée pour être comprimée contre le joint périphérique de la contre-porte ou contre le joint périphérique de la porte.
- Le guide allongé présente une section transversale de forme évasée comprenant deux parois à surface oblique, le guide allongé est configuré pour que, lorsque la contre-porte est refermée sur le caisson, l'une des deux parois à surface oblique entre en contact avec la gouttière et glisse contre la gouttière de sorte à positionner la contre-porte par rapport au caisson selon l'axe vertical, et, de préférence, un angle d'ouverture entre les deux parois à surface oblique, mesuré perpendiculairement à l'axe horizontal, est compris entre 5° et 20°, de préférence égal à 12°.
- Le tenon comprend un butoir de forme complémentaire à un bord d'une encoche ménagée dans un rebord de la porte, de sorte que le butoir est configuré pour être reçu dans l'encoche du rebord de la porte, et, de préférence, le butoir comprend au moins une lèvre configurée pour être écrasée contre le rebord de la porte.
- La base de positionnement comprend une paroi anti-projection, qui s'étend selon l'axe vertical depuis le tenon en s'éloignant de l'embase, et qui est configurée pour empêcher une infiltration d'eau entre la contre-porte et la porte, depuis l'extérieur du coffret électrique vers la gouttière, et, de préférence, la base de positionnement présente un congé, formé entre la paroi anti-projection et le tenon.
- Le joint d'étanchéité est fabriqué par moulage par injection, et, de préférence, le joint d'étanchéité est réalisé en caoutchouc EPDM.
- Mesurée perpendiculairement à l'axe de largeur, la plus petite épaisseur du tenon est supérieure ou égale à 3 mm.

Selon un autre aspect, l'invention concerne également un coffret électrique à double-porte comprenant un caisson, une contre-porte, une porte et deux joints d'étanchéité tels que mentionnés ci-dessus, dans lequel chaque joint d'étanchéité étanchéifie une jonction entre le caisson, la contre-porte et la porte.

Avantageusement, l'embase de chaque joint d'étanchéité est collée à la feuillure de la contre-porte, et la rainure de chaque joint d'étanchéité est collée à l'encoche de la contre-porte.

Ce coffret électrique à double-porte induit les mêmes avantages que ceux mentionnés ci-dessus au sujet du joint d'étanchéité de l'invention.

L'invention sera mieux comprise et d'autres avantages de celle-ci apparaitront plus clairement à la lumière de la description qui va suivre d'un mode de réalisation d'un joint d'étanchéité et d'un coffret électrique à double-porte, conformes à son principe, donnée uniquement à titre d'exemple et faite en référence aux dessins annexés dans lesquels :
[Fig. 1] La figure 1 est une vue en perspective d'un coffret électrique à double-porte conforme à l'invention, comprenant un caisson, une contre-porte, une porte et deux joints d'étanchéité conformes à l'invention ;

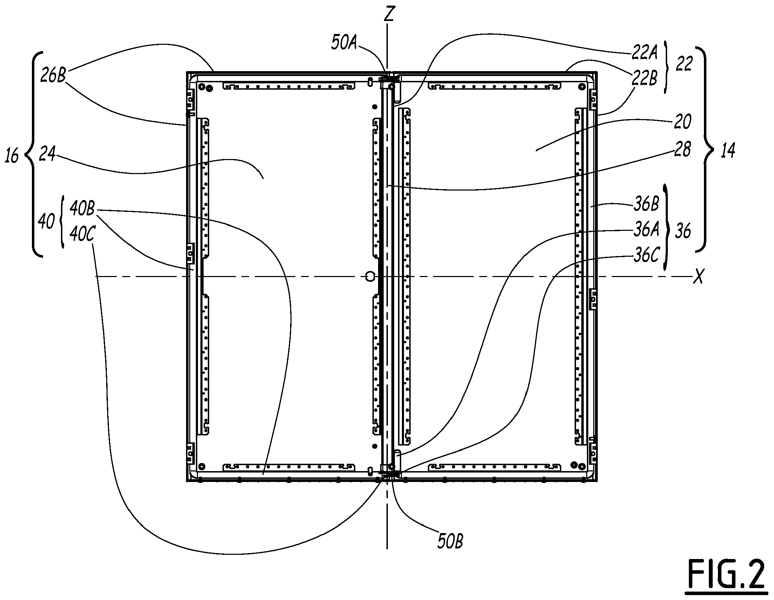

[Fig. 2] La figure 2 est une vue de derrière de la contre-porte, de la porte et des deux joints d'étanchéité du coffret électrique de la figure 1 ;

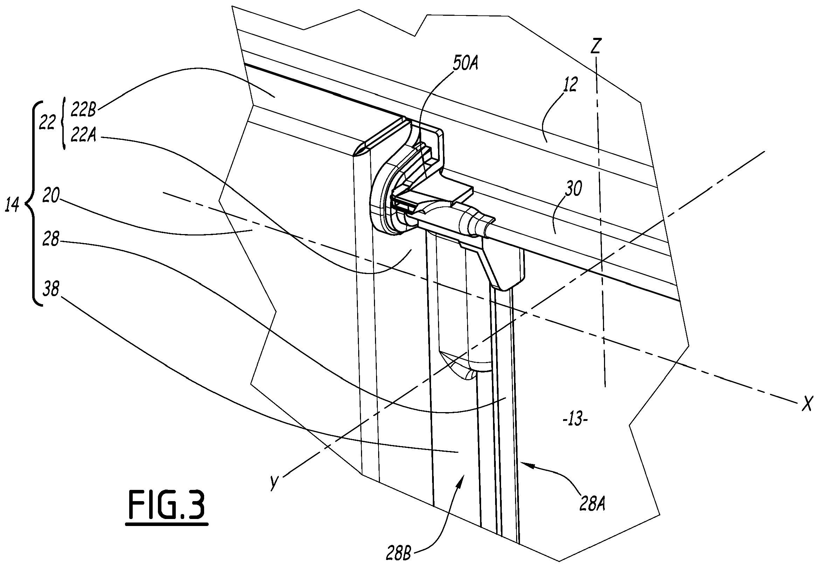

[Fig. 3] La figure 3 est une vue du détail III de la figure 1, la porte du coffret électrique étant masquée ;
[Fig. 4] La figure 4 est une vue en perspective de l'intérieur du coffret électrique, sur laquelle seules la contre-porte et la porte sont visibles ;
[Fig. 5] La figure 5 est une vue analogue à la figure 4, sur laquelle est, en outre, visible un joint d'étanchéité ;

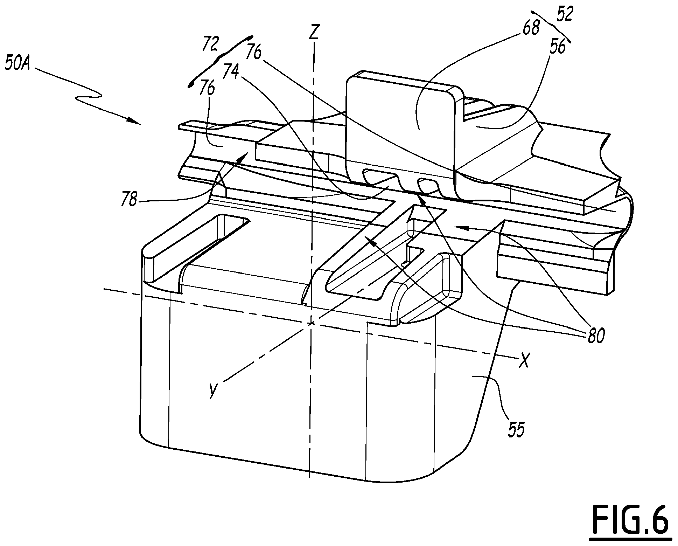

[Fig. 6] La figure 6 est une vue en perspective du joint d'étanchéité de la figure 5, vu seul ;
[Fig. 7] La figure 7 est une vue en perspective selon un autre angle du joint d'étanchéité des figures 5 et 6 ;
[Fig. 8] La figure 8 est une vue en perspective selon un autre angle du joint d'étanchéité des figures 5 à 7 ; et
[Fig. 9] La figure 9 est une vue de côté du joint d'étanchéité des figures 5 à 8, représenté à proximité d'une coupe du caisson du coffret de la figure 1.

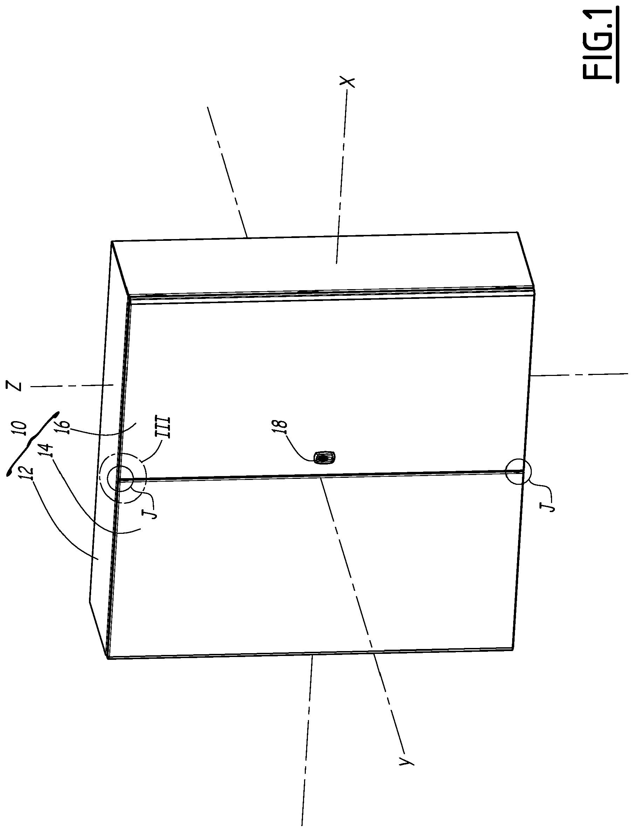

Un coffret électrique à double-porte 10 est représenté à la figure 1. Le coffret électrique 10 est destiné à accueillir des équipements électriques, non-représentés, tels que par exemple un tableau électrique ou des appareillages électriques.

On note X un axe de largeur, Y un axe de profondeur et Z un axe vertical du coffret électrique 10. Dans la suite de la description, les qualificatifs « gauche » et « droite » s'entendent selon l'axe de largeur X, les qualificatifs « avant » et « arrière » s'entendent selon l'axe de profondeur Y et les qualificatifs « haut » et « bas » s'entendent selon l'axe vertical Z, dans la configuration normale d'utilisation du coffret électrique 10, c'est-à-dire lorsque le coffret électrique est posé sur une surface plane, comme sur la figure 1. En configuration normale, les axes X et Y sont donc horizontaux.

Le coffret électrique 10 comprend un caisson 12, une contre-porte 14 et une porte 16. Le caisson 12 est de forme parallélépipédique et présente une ouverture 13, qui est dans l'exemple une ouverture plane perpendiculaire à l'axe de profondeur Y. La contre-porte 14 et la porte 16 sont montées pivotantes sur le caisson 12, de sorte à pouvoir fermer l'ouverture 13. De préférence, la porte 16 porte un système de verrouillage 18, qui permet de verrouiller la porte et la contre-porte 14 en position fermée.

Le caisson 12, la contre-porte 14 et la porte 16 sont chacun réalisés par pliage d'une tôle métallique, ce qui permet d'obtenir un coffret électrique 10 peu onéreux et simple à fabriquer. En pratique, la contre-porte 14 présente une plaque 20 rectangulaire et quatre rebords 22, qui s'étendent perpendiculairement à la plaque, tout autour de la plaque. Ensemble, les quatre rebords 22 forment un chant de la contre-porte 14. De même, la porte 16 présente une plaque 24 rectangulaire et quatre rebords 26, qui s'étendent perpendiculairement à la plaque, tout autour de la plaque, et qui forment un chant de la porte.

Lorsque le coffret électrique 10 est refermé, l'un des quatre rebords 22 de la contre-porte 14, noté 22A, et l'un des quatre rebords 26 de la porte 16, noté 26A, sont disposés côte à côte, et s'étendent, selon l'axe vertical Z, sur la hauteur de l'ouverture 13. Dans l'exemple, la contre-porte et la porte ont une largeur identique, donc les rebords 22A et 26A sont situés au centre de l'ouverture 13, selon l'axe de largeur X. Les trois autres rebords 22 sont notés 22B, et les trois autres rebords 26 sont notés 26B. Les rebords 22B et 26B s'étendent alors le long de la périphérie de l'ouverture 13 du caisson 12.

La contre-porte 14 présente une feuillure 28, qui s'étend depuis le rebord 22A en direction de la porte 16, selon l'axe de largeur X. La feuillure 28 est courbe, de sorte à présenter une partie convexe 28A, dirigée vers l'ouverture 13, et une partie concave 28B, dirigée à l'opposé de l'ouverture 13. Le rebord 26A de la porte 16 est en regard de la partie concave 28B de la feuillure. Dans l'exemple, la feuillure 28 est en forme de « U », la partie concave 28B correspondant à la partie intérieure du « U » et la partie convexe 28A correspondant à la partie extérieure du « U ».

Du fait de la présence de la feuillure 28, la fermeture du coffret électrique 10 s'obtient en refermant dans un premier temps la contre-porte 14 contre le caisson 12, puis en refermant la porte 16 contre le caisson et contre la feuillure.

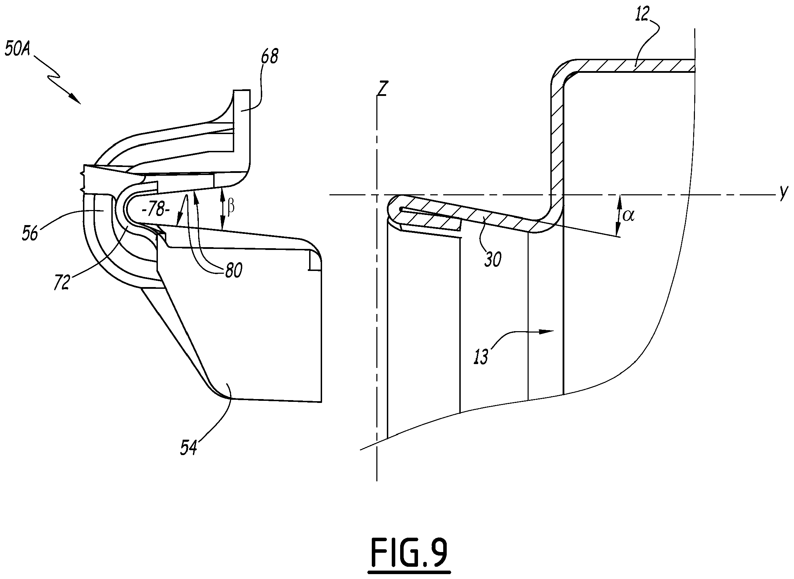

Le caisson 12 comprend une gouttière 30, qui s'étend tout autour de l'ouverture 13. Dans l'exemple, la gouttière 30 est formée en repliant les extrémités de la tôle métallique formant le caisson 12. On comprend alors que la gouttière 30 est formée de quatre parties, s'étendant sur les quatre côtés de l'ouverture 13. En pratique, et comme mieux visible à la figure 9, la gouttière 30 fait saillie en avant de l'ouverture 13 de manière oblique, c'est-à-dire que la gouttière 30 ne s'étend pas perpendiculairement à l'ouverture 13, mais présente un angle d'inclinaison α par rapport à l'axe de profondeur Y. De préférence, l'angle d'inclinaison α est compris entre 5° et 20°. Dans l'exemple, l'angle d'inclinaison α est égal à 10°.

La gouttière 30 s'étend ainsi vers les plaques 20 et 24 de la contre-porte 14 et de la porte 16, et est recouverte par leurs rebords 22B et 26B. En d'autres termes, les rebords 22B et 26B entourent la gouttière 30. La gouttière permet de récolter des écoulements d'eau se produisant entre la contre-porte 14 et le caisson 12, ou entre la porte 16 et le caisson, pour empêcher ces écoulements de pénétrer dans l'ouverture 13.

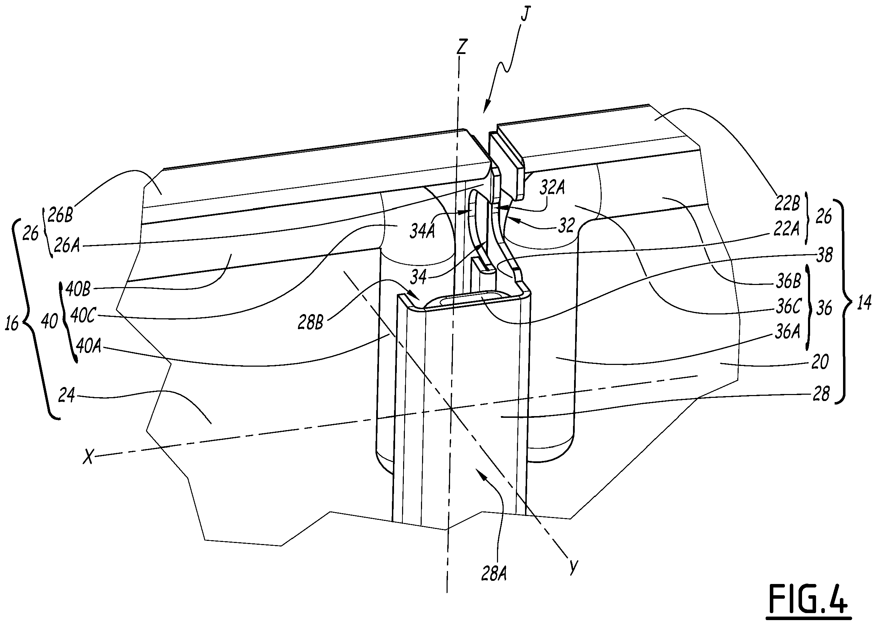

Pour accommoder la présence de la gouttière 30, le rebord 22A présente deux encoches 32, délimitées par des bords 32A et ménagées aux deux extrémités de ce rebord, selon l'axe vertical Z. En pratique, selon l'axe Z, une première encoche 32 est ménagée au-dessus de la feuillure 28, et une deuxième encoche 32 est ménagée en-dessous de la feuillure, de sorte que la feuillure s'étende entre les deux encoches. Les encoches 32 sont, dans l'exemple, en forme de « U » et une seule d'entre elles est visibles sur les figures, à la figure 4. De même, pour accommoder la présence de la gouttière 30, le rebord 26A présente deux encoches 34, délimitées par des bords 34A et ménagées aux deux extrémités du rebord, selon l'axe vertical Z et dont une seule est visible à la figure 4.

La gouttière 30 s'étend ainsi au travers des encoches 32 et 34 lorsque la contre-porte 14 et la porte 16 sont en position fermée. Plus précisément, la partie de la gouttière 30 située en haut de l'ouverture 13 traverse alors les encoches 32 et 34 du haut, et la partie de la gouttière située en bas de l'ouverture traverse alors les encoches 32 et 34 du bas.

La contre-porte 14 comprend un premier joint périphérique 36, qui est fixé sur la plaque 20, de sorte à être orienté vers l'ouverture 13 lorsque la porte est en position fermée, et s'étend de manière continue le long des rebords 22B de la contre-porte. Le premier joint périphérique 36 s'étend également partiellement le long du rebord 22A de la contre-porte, aux deux extrémités du rebord 22A, c'est-à-dire en haut et en bas du rebord 22A. De préférence, le premier joint périphérique 36 s'étend aux deux extrémités du rebord 22A sur une hauteur H36 qui est comprise entre 50 mm et 70 mm, par exemple sur 60 mm. On distingue alors les extrémités 36A du premier joint périphérique qui s'étendent le long du rebord 22A, des parties 36B du premier joint périphérique 36 qui s'étendent le long des rebords 22B. Entre les parties 36B et les extrémités 36A, le joint périphérique 36 présente des angles 36C, qui sont situés à distance des rebords 22A et 22B.

Lorsque la contre-porte 14 est fermée contre le caisson 12, alors les parties 36B du premier joint périphérique 36 sont en contact avec la gouttière 30, en étant écrasées contre la gouttière. Cela permet d'obtenir une étanchéité entre les rebords 22B de la contre-porte et le caisson.

La contre-porte 14 comprend un deuxième joint périphérique 38, qui est fixé sur la partie concave 28A de la feuillure 28, en s'étendant sur toute la hauteur de la feuillure. Lorsque la contre-porte 14 et la porte 16 sont fermées contre le caisson 12, alors le rebord 26A de la porte 16 est en contact avec le deuxième joint périphérique 38, et écrase le deuxième joint périphérique contre la feuillure 28, ce qui permet d'obtenir une étanchéité entre le rebord 26A de la porte et la feuillure de la contre-porte.

La porte 16 comprend un joint périphérique 40, qui est similaire au premier joint périphérique 36 de la contre-porte 14. Ainsi, le joint périphérique 40 est fixé sur la plaque 24 et qui s'étend de manière continue le long des rebords 26B, ainsi qu'aux deux extrémités du rebord 26B. Le joint périphérique 40 présente des extrémités 40A, des parties 40B et des angles 40C entre les parties 40B et les extrémités 40A. Lorsque la porte 16 est fermée contre le caisson 12, alors les parties 40B du joint périphérique 40 sont en contact avec la gouttière 30, en étant écrasées contre la gouttière, ce qui permet d'obtenir une étanchéité entre les rebords 26B de la porte et le caisson.

Les joints périphériques 36, 38 et 40 sont réalisés dans un matériau polymère déformable, de préférence en polyuréthane, de sorte à permettre leur écrasement.

Les joints périphériques 36, 38 et 40 permettent d'éviter des infiltrations et projections d'eau vers l'intérieur du caisson 12 au travers de l'ouverture 13. En effet, grâce aux joints périphériques 36 et 40, la jonction entre la contre-porte 14 et le caisson 12, au niveau des rebords 22B, ainsi que la jonction entre la porte 16 et le caisson, au niveau des rebords 26B, sont étanches, et grâce au joint périphérique 38, la jonction entre la contre-porte et la porte est également étanche, au niveau des rebords 22A et 26A.

Cependant, les joints périphériques 36, 38 et 40 ne permettent pas, à eux seuls, d'éviter les infiltrations et projections d'eau au niveau des deux jonctions entre le caisson 12, la contre-porte 14 et la porte 16, repérées « J » sur les figures, c'est-à-dire au niveau des extrémités haute et basse des rebords 22A et 26A. En particulier, les joints périphériques n'empêchent pas la pénétration d'eau entre la contre-porte et la porte au niveau des encoches 32 et 34.

Afin d'éviter ces infiltrations et projections d'eau, le coffret électrique 10 comprend deux joints d'étanchéités 50A et 50B, qui sont disposés aux deux jonctions J, entre le caisson 12, la contre-porte 14 et la porte 16.

Le joint d'étanchéité 50A est disposé à la jonction J située en haut du coffret électrique 10, selon l'axe vertical Z, et le joint d'étanchéité 50B est disposé à la jonction J située en bas du coffret électrique, selon l'axe vertical Z.

Les joints d'étanchéité 50A et 50B fonctionnent de la même manière, et sont symétriques l'un de l'autre, par rapport à un plan perpendiculaire à l'axe vertical Z et passant à mi-hauteur du coffret 10. Ainsi, par souci de concision, on décrit uniquement le joint d'étanchéité 50A dans la suite de la description, en le considérant monté sur la contre-porte 14, qui est en position fermée. En outre, dans la suite de la description, lorsqu'il est fait mention de l'encoche 32, cette mention fait référence, parmi les deux encoches 32, à celle ménagée dans le rebord 22A au-dessus de la feuillure 28. De même, la mention de l'encoche 34 fait référence, parmi les deux encoches 34, à l'encoche 34 ménagée à l'extrémité haute du rebord 26A. Par ailleurs, la mention de la gouttière 30 fait référence à la partie de la gouttière 30 située en haut de l'ouverture 13, c'est-à-dire à la partie de la gouttière s'étendant au travers des encoches 32 et 34, et la mention à la jonction J fait référence, parmi les deux jonctions J, à celle située en haut du coffret électrique.

Le joint d'étanchéité 50A comprend une base de positionnement 52, qui permet sa fixation à la contre-porte 14.

La base de positionnement 52 comporte une embase 54, qui s'étend selon l'axe vertical Z et qui est de forme complémentaire à la partie convexe 28A de la feuillure 28. En pratique, l'embase 54 prend la forme d'un cylindre droit non-circulaire s'étendant selon l'axe vertical Z, et une section transversale de l'embase, c'est-à-dire une section mesurée dans un plan perpendiculaire à l'axe vertical Z, est concave. L'embase 54 présente ainsi une surface interne 54A qui est concave. Le fait que la section transversale de l'embase 54 est concave est particulièrement avantageux pour faciliter le positionnement du joint d'étanchéité 50A contre la partie convexe 28A de la feuillure 28, car la surface interne 54A de l'embase 54 se conforme à la partie convexe 28A de la feuillure. Dans l'exemple, l'embase 54 présente une section transversale en forme de « U ». En plus de positionner le joint d'étanchéité 50A contre la feuillure 28, l'embase 54 assure une étanchéité entre le joint d'étanchéité et la feuillure.

L'embase 54 a une hauteur H54, mesurée selon l'axe vertical Z, comprise de préférence entre 10 mm et 20 mm, par exemple égale à 15 mm, ce qui assure un bon positionnement de l'embase sur la feuillure 28.

Dans l'exemple, l'embase 54 comprend deux ailettes 55, qui s'étendent sur toute la hauteur de l'embase. Le bord libre 55A de chaque ailette 55, opposé au dossier 57 qui relie ces ailettes, est oblique par rapport à l'axe Z.

La base de positionnement 52 comprend un tenon 56, qui comporte deux cales de positionnement 58A et 58B s'étendant parallèlement l'une à l'autre dans deux plans notés respectivement πA et πB perpendiculaires à l'axe de largeur X, c'est-à-dire dans deux plans longitudinaux πA et πB parallèles aux axes Y et Z. Selon l'axe de largeur X, la cale de positionnement 58A est située du côté de la contre-porte 14 et la cale de positionnement 58B est située du côté de la porte 16.

Le tenon 56 comporte une rainure 60, formée entre les deux cales de positionnement 58A et 58B. La rainure 60 est avantageusement de forme complémentaire à l'encoche 32 de la contre-porte 14, c'est-à-dire que, dans l'exemple, la rainure 60 a une section parallèle aux axes Y et Z en forme de « U ».

Ainsi, lorsque le coffret électrique 10 est assemblé, le bord 32A de l'encoche 32 de la contre-porte 14 est reçu dans la rainure 60 et les cales de positionnement 58A et 58B sont disposées de part et d'autre de l'encoche 32, c'est-à-dire de part et d'autre du rebord 22A de la contre-porte. La cale de positionnement 58A est alors située face à la plaque 20 et la cale de positionnement 58B est située entre la contre-porte et la porte 16. Le positionnement du joint d'étanchéité 50A sur la contre-porte 14, réalisé avec la base de positionnement 52, est alors fiable et précis, grâce à la complémentarité des formes de la rainure 60 et de l'encoche 32 d'une part, et de l'embase 54 et de la feuillure 28 d'autre part. En outre, le tenon 56, et plus précisément la rainure 60, permet de réaliser une étanchéité entre le joint d'étanchéité 50A et la contre-porte 14, au niveau du bord 32A de l'encoche 32.

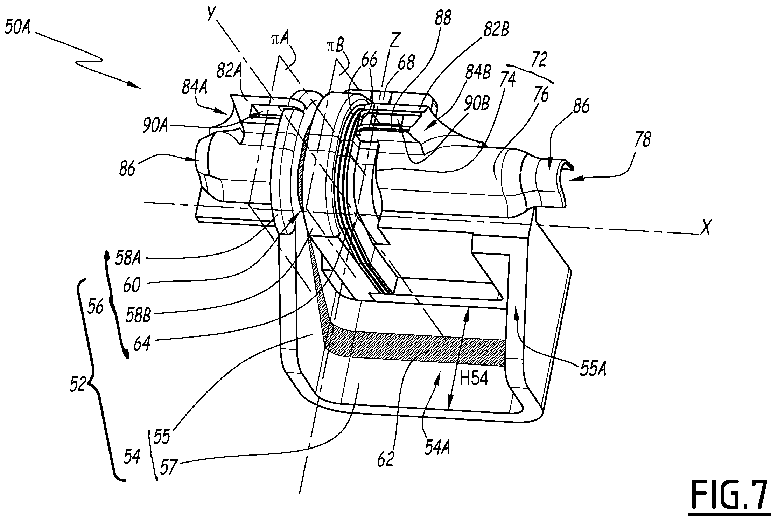

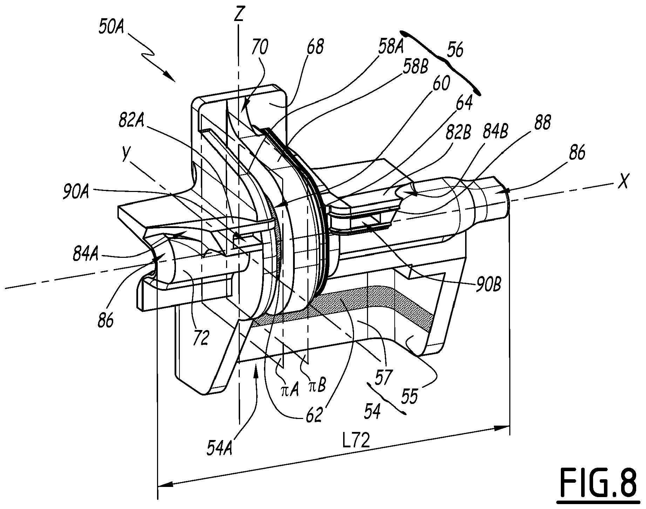

De préférence, afin d'assurer le maintien du joint d'étanchéité 50A sur la contre-porte 14, le joint d'étanchéité est collé à la contre-porte. Pour cela, un cordon de colle 62, représenté schématiquement par sa zone d'application sur les figures 7 et 8, est appliqué sur l'embase 54, y-compris sur les ailettes 55, et sur la rainure 60, de sorte à coller l'embase à la feuillure 28 et de sorte à coller le bord 32A de l'encoche 32 dans la rainure 60. En variante, la colle 62 est appliquée ponctuellement sur l'embase 54 et dans la rainure 60, par exemple au moyen de trois ou quatre points de colle.

Le tenon 56 comporte un butoir 64, s'étendant à partir la cale de positionnement 58B et selon l'axe X, à l'opposé de la rainure 60. Le butoir 64 présente une géométrie similaire au fond de la rainure 60 et une forme complémentaire à l'encoche 34 de la porte 16. Ainsi, dans l'exemple, le butoir 64 est en forme de « U ».

Lorsque la porte 16 est refermée sur le caisson 12 et sur la feuillure 28 de la contre-porte 14, le bord 34A de l'encoche 34 vient en contact avec le butoir 64, c'est-à-dire que le butoir est reçu dans l'encoche 34. Cette complémentarité de formes entre l'encoche 34 et le butoir 64, et ce contact entre le butoir et l'encoche, sont particulièrement avantageux, d'une part pour positionner verticalement la porte par rapport à la contre-porte, et d'autre part pour réaliser une étanchéité entre le joint d'étanchéité 50A et la porte 16, au niveau de l'encoche 34.

Avantageusement, le butoir 64 présente plusieurs lèvres 66, qui sont prévues pour être écrasées contre le bord 34A de l'encoche 34, lorsque la porte est refermée sur la contre-porte. Les lèvres 66 améliorent l'étanchéité entre le joint d'étanchéité 50A et la porte 16, au niveau de l'encoche 34, en formant des barrières successives contre les infiltrations d'eau. Dans l'exemple, le butoir 64 comprend deux lèvres 66. En variante, le butoir comprend un nombre différent de lèvres, par exemple une seule lèvre ou trois lèvres, voire plus.

Lorsque la contre-porte 14 et la porte 16 sont refermées sur le caisson 12, alors la cale de positionnement 58B est située entre la contre-porte et la porte, ce qui permet à la fois d'empêcher les infiltrations d'eau entre la contre-porte et la porte, au niveau du joint d'étanchéité 50A, et de positionner la porte par rapport à la contre-porte, en empêchant un affaissement de la porte vers la contre-porte, selon l'axe de largeur X.

La base de positionnement 52 comprend une paroi anti-projection 68, qui s'étend depuis le tenon 56 selon l'axe vertical Z, vers le haut, c'est-à-dire en s'éloignant de l'embase 54. La paroi anti-projection 68 permet d'éviter des infiltrations d'eau entre la porte et la contre-porte, au niveau de la jonction J, et particulièrement les infiltrations d'eau dirigées vers la gouttière 30. En pratique, la paroi anti-projection 68 s'étend jusqu'au niveau des rebords 22B et 26B situés en haut de la contre-porte 14 et de la porte 16. Grâce à la paroi anti-projection 68, une projection d'eau dirigée vers la gouttière 30 au niveau de la jonction J est redirigée vers l'extérieur du coffret électrique 10. Avantageusement, la base de positionnement 52 présente un congé 70, qui est formé entre la paroi anti-projection 68 et la cale de positionnement 58B du tenon 56, ce qui améliore la redirection d'un jet d'eau vers l'extérieur du coffret électrique.

Le joint d'étanchéité 50A comprend un guide allongé 72, qui s'étend selon l'axe de largeur X en traversant le tenon 56. Le guide allongé 72 traverse le tenon 56 sans interaction avec la rainure 60, le butoir 64 et les cales de positionnement 58A et 58B, de sorte à être situé à distance des encoches 32 et 34. En pratique, le guide allongé 72 est éloigné des encoches 32 et 34, selon l'axe de profondeur Y, de sorte à être plus proche de l'ouverture 13 que les encoches. En d'autres termes, la rainure 60, le butoir 64 et les cales de positionnement 58A et 58B sont orientés vers l'avant, alors que le guide allongé 72 est orienté vers l'arrière. Par ailleurs, le guide allongé 72 est aligné avec les encoches 32 et 34, selon l'axe vertical Z, et est ainsi aligné avec la gouttière 30, selon l'axe vertical Z.

On note L72 la longueur du guide allongé 72, mesuré selon l'axe de largeur X. Cette longueur correspond en pratique à l'encombrement maximum du joint d'étanchéité 50A selon l'axe de largeur X, et est de préférence comprise entre 30 mm et 70 mm, par exemple égale à 50 mm.

Dans l'exemple, le guide allongé 72 comprend une partie centrale 74, qui correspond à la partie du guide allongé traversant le tenon 56, et deux parties latérales 76, disposées de part et d'autre de la partie centrale 74. Dans l'exemple, les deux parties latérales 76 ont la forme de deux demi-cylindres creux s'étendant selon l'axe de largeur X.

Le guide allongé 72 forme une gorge 78, qui s'étend également selon l'axe de largeur X, sur toute la largeur du guide allongé, à la fois dans la partie centrale 74 et dans les deux parties latérales 76. La gorge 78 est ouverte vers l'intérieur du caisson 12 et vers l'ouverture 13, c'est-à-dire à l'opposé de la rainure 60 et du butoir 64. La gorge 78 est ainsi située en regard de la gouttière 30. Lorsque la contre-porte 14 est refermée sur le caisson 12, la gouttière 30 pénètre dans la gorge 78 jusqu'à être en appui contre le guide allongé au fond de la gorge 78, c'est-à-dire jusqu'à être en contact avec le joint l'étanchéité 50A. En d'autres termes, la gorge 78 reçoit la gouttière 30.

En outre, lorsque la contre-porte 14 est refermée sur le caisson 12, la gouttière 30 tend à écraser le guide allongé 72, sur toute sa longueur. Cet appui de la gouttière 30 contre le guide allongé 72 assure une étanchéité entre la gouttière et le joint d'étanchéité 50, ce qui empêche des écoulements et projections d'eau entre la gouttière et le joint d'étanchéité.

Comme visible à la figure 9, la partie centrale 74 du guide allongé 72 présente deux parois à surface oblique 80, qui s'étendent en regard l'une de l'autre depuis la gorge 78 en s'éloignant du tenon 56. Les deux parois 80 divergent en s'éloignant du fond de la gorge 78, avec un angle d'ouverture β compris entre 5° et 20°, mesuré dans un plan perpendiculaire à l'axe de largeur X. Dans l'exemple, l'angle d'ouverture β est égal à 12° Le guide allongé 72 présente ainsi une section transversale de forme évasée.

Les deux parois à surface oblique 80 sont particulièrement avantageuse pour assurer un bon positionnement vertical du joint d'étanchéité 50A par rapport à la gouttière 30, ce qui entraîne un bon positionnement vertical du rebord 22A de la contre-porte 14 par rapport au caisson 12, puisque le joint d'étanchéité 50A est fixé à la feuillure 28 de la contre-porte. En effet, si le rebord 22A de la contre-porte est mal aligné verticalement avec la gouttière 30, alors au cours de la fermeture de la contre-porte sur le caisson, l'une des deux parois 80 entre en contact avec la gouttière 30, puis glisse contre la gouttière jusqu'à ce que la gouttière soit en appui au fond de la gorge 78. Ce glissement du joint d'étanchéité contre l'une des parois 80 conduit à exercer un effort entre la paroi et la gouttière 30, et cet effort comprend une composante portée par l'axe vertical Z qui tend à repositionner verticalement le joint d'étanchéité 50A par rapport à la gouttière, corrigeant ainsi tout défaut d'alignement vertical entre le rebord 22A de la contre-porte et le caisson 12.

Le guide allongé 72 permet donc à la fois d'assurer une étanchéité entre le joint d'étanchéité 50A et la gouttière 30 et de positionner le joint d'étanchéité selon l'axe vertical Z par rapport à la gouttière.

Comme visible aux figures 7 et 8, le joint d'étanchéité 50a comprend deux saillies d'étanchéité 82A et 82B, qui sont disposées de part et d'autre du tenon 56, selon l'axe de largeur X.

La saillie d'étanchéité 82A est disposée au niveau de la contre-porte 14, en étant en contact avec la plaque 20. En pratique, la saillie d'étanchéité 82A s'étend entre le rebord 22A de la contre-porte et l'angle 36C du premier joint périphérique 36 de la contre-porte. Avantageusement, la saillie d'étanchéité 82A présente un congé 84A, qui permet à la saillie d'étanchéité d'épouser la forme du premier joint périphérique 36. La saillie d'étanchéité 82A permet ainsi d'empêcher les infiltrations et projections d'eau entre le joint d'étanchéité 50A et la contre-porte 14, au niveau de l'angle 36C du premier joint périphérique 36.

De manière analogue, la saillie d'étanchéité 82B est disposée au niveau de la porte 16, en étant en contact avec la plaque 24, et en s'étendant entre le rebord 26A et l'angle 40C du joint périphérique 40. Avantageusement, la saillie d'étanchéité 82B présente un congé 84B, qui permet à la saillie d'étanchéité d'épouser la forme du joint périphérique 40. La saillie d'étanchéité 82B permet ainsi d'empêcher les infiltrations et projections d'eau entre le joint d'étanchéité 50A et la porte 16, au niveau de l'angle 40C du joint périphérique 40.

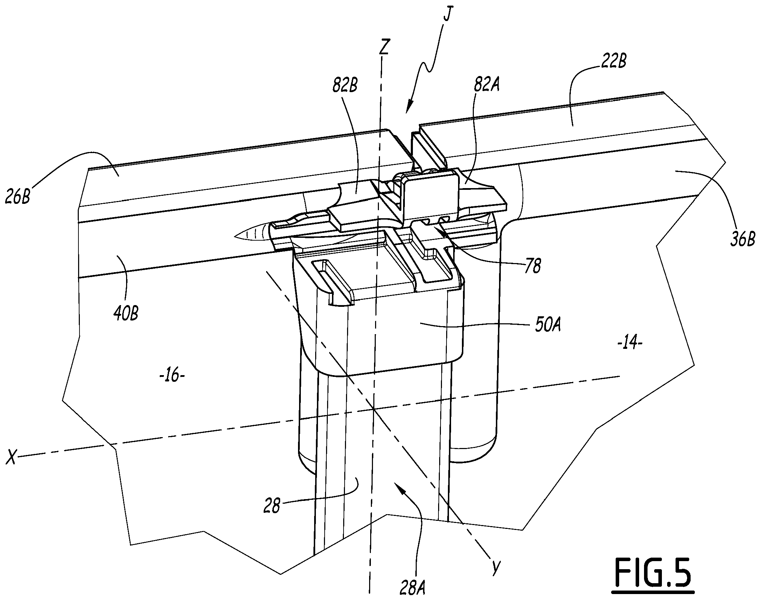

Grâce aux saillies d'étanchéité 82A et 82B, le joint périphérique 50A réalise une étanchéité continue entre le premier joint périphérique 36 de la contre-porte 14 et le joint périphérique 40 de la porte 16. Ces saillies d'étanchéité, associées au guide allongé 72 en appui contre la gouttière 30, permettent d'éviter les infiltrations d'eau au niveau de la jonction J, sur la partie de la gouttière 30 qui n'est pas en contact avec les joints périphériques 36 et 40. Cette continuité de l'étanchéité entre le joint d'étanchéité 50A et les joints périphériques 36 et 40 est mieux visible à la figure 5.

De manière particulièrement avantageuse, du côté opposé de la gorge 78, les parties latérales 76 du guide allongé 72 compressent les joints périphériques 36 et 40, ce qui améliore l'étanchéité entre le joint d'étanchéité 50A et les joints périphériques. Dans l'exemple, les parties latérales 76 du guide allongé 72 sont effilées au niveau de leurs extrémités, c'est-à-dire qu'elles présentent des extrémités affinées 86, de sorte à mieux épouser la forme des joints périphériques 36 et 40, ce qui contribue également à améliorer l'étanchéité entre le joint d'étanchéité 50A et les joints périphériques. En outre, cette compression du guide allongé 72 contre les joints périphériques 36 et 40 entraîne également une compression du guide allongé contre la gouttière 30, ce qui améliore l'étanchéité entre le guide allongé et la gouttière.

Avantageusement, la saillie d'étanchéité 82B présente des lèvres 88 qui sont écrasées contre la porte 16 lorsque la porte est refermée sur la contre-porte 14. Les lèvres 88 permettent ainsi d'améliorer l'étanchéité entre le joint d'étanchéité 50A et la porte 16. Dans l'exemple, la saillie d'étanchéité 82B comprend deux lèvres 88. En variante, la saillie d'étanchéité comprend un nombre différent de lèvres 88, par exemple une seule lèvre ou trois lèvres, voire plus.

En résumé, le joint d'étanchéité 50A assure une étanchéité complète de la jonction J, en assurant un contact étanche avec :
- la gouttière 30, grâce à la gorge 78 du guide allongé 72,
- la feuillure 28 de la contre-porte 14, grâce à l'embase 54,
- le rebord 22A de la contre-porte 14, grâce à la rainure 60 et aux cales de positionnement 58A et 58B du tenon 56,
- le rebord 36A de la porte 16, grâce au butoir 64 et à la cale de positionnement 58B du tenon 56,
- le premier joint périphérique 36 de la contre-porte 14, grâce à la saillie d'étanchéité 82A et également grâce à l'une des deux parties latérales 76 du guide allongé, et
- le joint périphérique 40 de la porte 16, grâce à la saillie d'étanchéité 82B et également grâce à l'une des deux parties latérales 76 du guide allongé.

Ainsi, associé aux joints périphériques 36, 38 et 40, le joint d'étanchéité 50A permet d'obtenir une étanchéité complète de l'ouverture 13 du coffret électrique 10, c'est-à-dire une protection complète contre les projections d'eau, en empêchant les infiltrations d'eau entre le caisson 12, la contre-porte 14 et la porte 16. Les équipements électriques disposés dans le coffret électrique sont ainsi protégés. De manière particulièrement avantageuse, le joint d'étanchéité 50A, et les joints périphériques 36, 38 et 40 permettent également de protéger l'intérieur du coffret électrique contre les infiltrations de corps solides et de poussières. En pratique, et selon la norme européenne EN 60529, le coffret électrique 10 présente un indice de protection d'enveloppe supérieur ou égal à IP55.

En outre, le joint d'étanchéité 50A permet d'assurer un bon positionnement vertical de la contre-porte 14 par rapport au caisson 12, grâce à la gorge 78 du guide allongé 72, ainsi qu'un bon positionnement vertical de la porte 16 par rapport à la contre-porte 14, grâce au butoir 64, ce qui dispense de recourir à des pions de centrage pour maîtriser le positionnement de la contre-porte et de la porte par rapport au caisson.

Le joint d'étanchéité 50A est fabriqué par moulage par injection d'un matériau souple, comme par exemple du caoutchouc EPDM. De préférence, la dureté du matériau utilisé pour fabriquer le joint d'étanchéité est d'environ 50 Shore A.

Ainsi, le joint d'étanchéité 50A est à la fois monomatière et monobloc, ce qui permet d'obtenir un joint d'étanchéité simple, résistant et peu onéreux à fabriquer.

De manière particulièrement avantageuse, la géométrie du joint d'étanchéité 50A est adaptée de sorte à faire varier les épaisseurs de matière entre les différentes parties du joint d'étanchéité, en fonction de la déformabilité recherchée. Notamment, les parties latérales 76 du guide allongé 72 présentent une faible épaisseur, ce qui favorise leur déformation afin de mieux se conformer, d'une part, à la gouttière 30 et, d'autre part, aux joints périphériques 36 et 40, de sorte à améliorer l'étanchéité du guide allongé avec la gouttière et les joints périphériques. De même, l'épaisseur des saillies d'étanchéité 82A et 82B est réduite à l'aide de cavités 90A et 90B, qui favorisent la déformation des saillies d'étanchéité de sorte à obtenir une meilleure étanchéité avec la contre-porte 14 et avec la porte 16. À l'inverse, le tenon 56, et donc la partie centrale 74 du guide allongé 72, présente une épaisseur importante, ce qui augmente sa rigidité. Cette rigidité importante du tenon et de la partie centrale du guide allongé est particulièrement avantageuse pour améliorer le positionnement du joint d'étanchéité par rapport à la contre-porte 14, par l'intermédiaire de la rainure 60, et par rapport à la porte 16, par l'intermédiaire du butoir 64, ainsi que pour améliorer le positionnement du joint d'étanchéité par rapport à la gouttière 30, par l'intermédiaire de la partie centrale du guide allongé.

En pratique, afin d'obtenir une rigidité suffisante du tenon 56, la plus petite épaisseur du tenon, mesurée perpendiculairement à l'axe de largeur X, est supérieure ou égale à 3 mm.

En d'autres termes, le joint d'étanchéité 50A est optimisé de sorte à ce qu'il se déforme facilement là où une déformation du joint d'étanchéité est utile pour obtenir une bonne étanchéité, et de sorte à être rigide là où la rigidité du joint d'étanchéité est utile pour maîtriser le positionnement relatif du caisson 12, de la contre-porte 14 et de la porte 16. Ces propriétés sont obtenues à l'aide d'un joint d'étanchéité monomatière, ce qui est particulièrement intéressant pour diminuer les coûts de fabrication du joint d'étanchéité et pour faciliter son recyclage.

En variante non-représentée de l'invention, le joint d'étanchéité 50A n'est pas collé à la contre-porte 14. De préférence, dans une telle variante, la base de positionnement 52 présente un élément de maintien en position, qui s'étend parallèlement à l'embase 54 de sorte à être en contact avec la feuillure 28, du côté de la concavité 28B de la feuillure, permettant ainsi de maintenir le joint d'étanchéité monté sur la feuillure, en combinaison avec la rainure 60 du tenon 56, qui coopère avec le rebord 22A de la contre-porte.

En variante non-représentée de l'invention, les encoches 32 et 34 présentent deux formes différentes. Par exemple, l'encoche 32 est en forme de « U » et l'encoche 34 est en forme de « V ». Les formes de la rainure 60 et du butoir 64 sont alors adaptés en conséquence, de sort à être complémentaires avec les formes des encoches.

## Revendications

1. Joint d'étanchéité (50A, 50B) monobloc et monomatière pour un coffret électrique à double-porte (10), destiné à étanchéifier une jonction (J) entre un caisson (12), une contre-porte (14) et une porte (16) du coffret électrique, comprenant :
- une base de positionnement (52), comportant :
∘ une embase (54) en forme de cylindre droit non-circulaire s'étendant selon un axe vertical (Z), une surface interne (54A) de l'embase étant concave, l'embase étant configurée pour être fixée sur une feuillure (28) de la contre-porte du coffret, de sorte que l'embase coopère par complémentarité de formes avec une partie convexe (28A) de la feuillure, et
∘ un tenon (56), comportant deux cales de positionnement (58A, 58B) s'étendant parallèlement l'une à l'autre dans deux plans longitudinaux (πA, πB) parallèles à l'axe vertical (Z), et une rainure (60) formée entre les deux cales de positionnement, la rainure étant configurée pour recevoir un bord (32A) d'une encoche (32) ménagée dans un rebord (22A) de la contre-porte, la rainure étant configurée pour être de forme complémentaire à une forme de l'encoche ; et
- un guide allongé (72), s'étendant selon un axe horizontal (X) perpendiculaire à l'axe vertical (Z) et aux plans longitudinaux (πA, πB) en traversant le tenon (56), et formant une gorge (78), configurée pour recevoir une gouttière (30) du caisson, la gouttière étant en appui contre le guide allongé, de sorte à positionner le joint d'étanchéité (50A, 50B) selon l'axe vertical par rapport à la gouttière, et de sorte à assurer une étanchéité entre le joint d'étanchéité et la gouttière.

2. Joint d'étanchéité (50A, 50B) selon la revendication 1, comprenant deux saillies d'étanchéité (82A, 82B), disposées de part et d'autre du tenon (56), selon l'axe horizontal (X), une première saillie d'étanchéité (82A) étant configurée pour être en appui contre la contre-porte (14), de sorte à assurer une étanchéité entre le joint d'étanchéité (50A, 50B) et la contre-porte, la deuxième saillie d'étanchéité (82B) étant configurée pour être en appui contre la porte (16), de sorte à assurer une étanchéité entre le joint d'étanchéité et la porte, et dans lequel, de préférence, la deuxième saillie d'étanchéité (82A) comprend au moins une lèvre (88) configurée pour être écrasée contre la porte.

3. Joint d'étanchéité (50A, 50B) selon la revendication 2, dans lequel la première saillie d'étanchéité (82A) comprend un congé (84A), configuré pour être en appui contre un joint périphérique (36) de la contre-porte (14), dans lequel la deuxième saillie d'étanchéité (82B) comprend un congé (84B), configuré pour être en appui contre un joint périphérique (40) de la porte (16), et dans lequel le guide allongé (72) présente deux parties latérales (76), chaque partie latérale étant configurée pour être comprimée contre le joint périphérique de la contre-porte ou contre le joint périphérique de la porte.

4. Joint d'étanchéité (50A, 50B) selon l'une des revendications précédentes, dans lequel le guide allongé (72) présente une section transversale de forme évasée comprenant deux parois à surface oblique (80), dans lequel le guide allongé est configuré pour que, lorsque la contre-porte (14) est refermée sur le caisson (12), l'une des deux parois à surface oblique entre en contact avec la gouttière (30) et glisse contre la gouttière de sorte à positionner la contre-porte par rapport au caisson selon l'axe vertical (Z), et dans lequel, de préférence, un angle d'ouverture (β) entre les deux parois à surface oblique, mesuré perpendiculairement à l'axe horizontal (X), est compris entre 5° et 20°, de préférence égal à 12°.

5. Joint d'étanchéité (50A, 50B) selon l'une des revendications précédentes, dans lequel le tenon (56) comprend un butoir (64) de forme complémentaire à un bord (34A) d'une encoche (34) ménagée dans un rebord (26A) de la porte (16), de sorte que le butoir est configuré pour être reçu dans l'encoche du rebord de la porte, et dans lequel, de préférence, le butoir comprend au moins une lèvre (66) configurée pour être écrasée contre le rebord de la porte.

6. Joint d'étanchéité (50A, 50B) selon l'une des revendications précédentes, dans lequel la base de positionnement (52) comprend une paroi anti-projection (68), qui s'étend selon l'axe vertical (Z) depuis le tenon (56) en s'éloignant de l'embase (54), et qui est configurée pour empêcher une infiltration d'eau entre la contre-porte (14) et la porte (16), depuis l'extérieur du coffret électrique (10) vers la gouttière (30), et dans lequel, de préférence, la base de positionnement (52) présente un congé (70), formé entre la paroi anti-projection et le tenon.

7. Joint d'étanchéité (50A, 50B) selon l'une des revendications précédentes, dans lequel le joint d'étanchéité est fabriqué par moulage par injection, et dans lequel, de préférence, le joint d'étanchéité est réalisé en caoutchouc EPDM.

8. Joint d'étanchéité (50A, 50B) selon l'une des revendications précédentes, dans lequel, mesurées perpendiculairement à l'axe de largeur (X), la plus petite épaisseur du tenon est supérieure ou égale à 3 mm.

9. Coffret électrique à double-porte (10) comprenant un caisson (12), une contre-porte (14), une porte (16) et deux joints d'étanchéité (50A, 50B) selon l'une des revendications précédentes, dans lequel chaque joint d'étanchéité (50A, 50B) étanchéifie une jonction (J) entre le caisson, la contre-porte et la porte.

10. Coffret électrique à double-porte (10) selon la revendication 9, dans lequel l'embase (54) de chaque joint d'étanchéité (50A, 50B) est collée à la feuillure (28) de la contre-porte (14), et dans lequel la rainure (60) de chaque joint d'étanchéité est collée à l'encoche (32) de la contre-porte.

## Patentansprüche

1. Monoblock- und Monomaterialdichtung (50A, 50B) für einen Doppeltürschaltschrank (10), die dazu bestimmt ist, eine Verbindung (J) zwischen einem Kasten (12), einer Gegentür (14) und einer Tür (16) des Schaltschranks abzudichten, umfassend:
- eine Positionierungsbasis (52), umfassend:
o einen Sockel (54) in Form eines geraden, nicht kreisförmigen Zylinders, der sich entlang einer vertikalen Achse (Z) erstreckt, wobei eine Innenfläche (54A) des Sockels konkav ist, wobei der Sockel konfiguriert ist, um an einem Falz (28) der Gegentür des Kastens befestigt zu werden, sodass der Sockel formschlüssig mit einem konvexen Teil (28A) des Falzes zusammenwirkt, und
o einen Zapfen (56), umfassend zwei Positionierungsklötze (58A, 58B), die sich parallel zueinander in zwei Längsebenen (πA, πB) parallel zu der vertikalen Achse (Z) erstrecken, und eine Nut (60), die zwischen den beiden Positionierungskeilen ausgebildet ist, wobei die Nut konfiguriert ist, um eine Kante (32A) einer Kerbe (32) aufzunehmen, die in einem Flansch (22A) der Gegentür ausgebildet ist, wobei die Nut konfiguriert ist, um in komplementärer Form zu einer Form der Kerbe zu sein; und
- eine längliche Führung (72), die sich entlang einer horizontalen Achse (X) senkrecht zu der vertikalen Achse (Z) und den Längsebenen (πA, πB) durch den Zapfen (56) erstreckt und eine Kehle (78) bildet, die konfiguriert ist, um eine Rinne (30) des Kastens aufzunehmen, wobei die Rinne an der länglichen Führung anliegt, sodass die Dichtung (50A, 50B) entlang der vertikalen Achse in Bezug auf die Rinne positioniert wird, und um eine Abdichtung zwischen der Dichtung und der Rinne zu gewährleisten.

2. Dichtung (50A, 50B) nach Anspruch 1, mit umfassend zwei Dichtungsvorsprünge (82A, 82B), die auf beiden Seiten des Zapfens (56) entlang der horizontalen Achse (X) angeordnet sind, wobei ein erster Dichtungsvorsprung (82A) konfiguriert ist, um an der Gegentür (14) anzuliegen, um eine Abdichtung zwischen der Dichtung (50A, 50B) und der Gegentür zu gewährleisten, wobei der zweite Dichtungsvorsprung (82B) konfiguriert ist, um an der Tür (16) anzuliegen, um eine Abdichtung zwischen der Dichtung und der Tür zu gewährleisten, und wobei vorzugsweise der zweite Dichtungsvorsprung (82A) mindestens eine Lippe (88) umfasst, die konfiguriert ist, um gegen die Tür gequetscht zu werden.

3. Dichtung (50A, 50B) nach Anspruch 2, wobei der erste Dichtungsvorsprung (82A) eine Auskehlung (84A) umfasst, die konfiguriert ist, um an einer Umfangsdichtung (36) der Gegentür (14) anzuliegen, wobei der zweite Dichtungsvorsprung (82B) eine Auskehlung (84B) umfasst, die konfiguriert ist, um an einer Umfangsdichtung (40) der Tür (16) anzuliegen, und wobei die längliche Führung (72) zwei Seitenabschnitte (76) aufweist, wobei jeder Seitenabschnitt konfiguriert ist, um gegen die Umfangsdichtung der Gegentür oder gegen die Umfangsdichtung der Tür gepresst zu werden.

4. Dichtung (50A, 50B) nach einem der vorherigen Ansprüche, wobei die längliche Führung (72) einen konisch geformten Querschnitt umfassend zwei Wände mit schräger Oberfläche (80), wobei die längliche Führung konfiguriert ist, damit, wenn die Gegentür (14) an dem Kasten (12) geschlossen wird, eine der zwei Wände mit schräger Oberfläche in Kontakt mit der (30) kommt und an der Rinne gleitet, sodass die Gegentür in Bezug auf den Kasten entlang der vertikalen Achse (Z) positioniert wird, und wobei vorzugsweise ein Öffnungswinkel (β) zwischen den zwei Wänden mit schräger Oberfläche, gemessen senkrecht zu der horizontalen Achse (X), zwischen 5° und 20°, vorzugsweise 12°, ist.

5. Dichtung (50A, 50B) nach einem der vorherigen Ansprüche, wobei der Zapfen (56) einen Anschlag (64) mit komplementärer Form zu einer Kante (34A) einer Kerbe (34) umfasst, die in einem Flansch (26A) der Tür (16) ausgebildet ist, sodass der Anschlag konfiguriert ist, um in der Kerbe des Flanschs der Tür aufgenommen zu werden, und wobei der Anschlag vorzugsweise mindestens eine Lippe (66) umfasst, die konfiguriert ist, um gegen den Flansch der Tür gequetscht zu werden.

6. Dichtung (50A, 50B) nach einem der vorherigen Ansprüche, wobei die Positionierungsbasis (52) eine Spritzschutzwand (68) umfasst, die sich entlang der vertikalen Achse (Z) von dem Zapfen (56) weg von dem Sockel (54) erstreckt, und die konfiguriert ist, um ein Eindringen von Wasser zwischen der Gegentür (14) und der Tür (16) von der Außenseite des Schaltkastens (10) in Richtung der Regenrinne (30) zu verhindern, und wobei die Positionierungsbasis (52) vorzugsweise eine Auskehlung (70) aufweist, die zwischen der Spritzschutzwand und dem Zapfen gebildet ist.

7. Dichtung (50A, 50B) nach einem der vorherigen Ansprüche, wobei die Dichtung durch Spritzgießen gefertigt ist, und wobei die Dichtung vorzugsweise aus EPDM-Kautschuk realisiert ist.

8. Dichtung (50A, 50B) nach einem der vorherigen Ansprüche, wobei die kleinste Stärke des Zapfens, gemessen senkrecht zu der Breitenachse (X) größer als oder gleich wie 3 mm ist.

9. Doppeltürschaltschrank (10) umfassend einen Kasten (12), eine Gegentür (14), eine Tür (16) und zwei Dichtungen (50A, 50B) nach einem der vorherigen Ansprüche, wobei jede Dichtung (50A, 50B) eine Verbindung (J) zwischen dem Kasten, der Gegentür und der Tür abdichtet.

10. Doppeltürschaltschrank (10) nach Anspruch 9, wobei der Sockel (54) jeder Dichtung (50A, 50B) mit dem Falz (28) der Gegentür (14) verklebt ist, und wobei die Nut (60) jeder Dichtung mit der Kerbe (32) der Gegentür verklebt ist.

## Claims

1. A one-piece, single-material seal (50A, 50B) for a double-panel electrical cabinet (10), intended to seal a junction (J) between an enclosure (12), a back panel (14) and a front panel (16) of the electrical cabinet, comprising:
- a positioning base (52), comprising:
∘ a base (54) in the form of a non-circular straight cylinder extending along a vertical axis (Z), an internal surface (54A) of the base being concave, the base being configured to be attached to a rabbet (28) of the back panel of the cabinet, so that the base mates in a form-fitting manner with a convex part (28A) of the rabbet, and
∘ a tenon (56), comprising two positioning wedges (58A, 58B) extending parallel to each other in two longitudinal planes (πA, πB) parallel to the vertical axis (Z), and a groove (60) formed between the two positioning wedges, the groove being configured to receive an edge (32A) of a notch (32) formed in a flange (22A) of the back panel, the groove being configured so that its shape fits a shape of the notch; and
- an elongate guide (72), extending along a horizontal axis (X) perpendicular to the vertical axis (Z) and to the longitudinal planes (πA, πB) and passing through the tenon (56), and forming a groove (78) configured to receive a channel (30) of the enclosure, the channel bearing against the elongate guide, so as to position the seal (50A, 50B) along the vertical axis relative to the channel, and so as to provide impermeability between the seal and the channel.

2. The seal (50A, 50B) according to claim 1, comprising two sealing projections (82A, 82B) arranged on either side of the tenon (56) along the horizontal axis (X), a first sealing projection (82A) being configured to bear against the back panel (14) so as to provide impermeability between the seal (50A, 50B) and the back panel, the second sealing projection (82B) being configured to bear against the front panel (16), so as to provide impermeability between the seal and the front panel, and wherein, preferably, the second sealing projection (82A) comprises at least one lip (88) configured to be compressed against the front panel.

3. The seal (50A, 50B) according to claim 2, wherein the first sealing projection (82A) comprises a fillet (84A), configured to bear against a peripheral seal (36) of the back panel (14), wherein the second sealing projection (82B) comprises a fillet (84B), configured to bear against a peripheral seal (40) of the front panel (16), and wherein the elongate guide (72) has two lateral portions (76), each lateral portion being configured to be compressed against the peripheral seal of the back panel or against the peripheral seal of the front panel.

4. The seal (50A, 50B) according to one of the preceding claims, wherein the elongate guide (72) has a flared cross-section comprising two oblique-surface walls (80), wherein the elongate guide is configured so that, when the back panel (14) is closed on the enclosure (12), one of the two oblique-surface walls comes into contact with the channel (30) and slides against the channel so as to position the back panel relative to the enclosure along the vertical axis (Z), and wherein, preferably, an opening angle (β) between the two oblique-surface walls, measured perpendicularly to the horizontal axis (X), is between 5° and 20°, preferably equal to 12°.

5. The seal (50A, 50B) according to one of the preceding claims, wherein the tenon (56) comprises a stop (64) complementary in shape to an edge (34A) of a notch (34) formed in a rim (26A) of the front panel (16), such that the stop is configured to be received in the notch of the rim of the front panel, and wherein preferably the stop comprises at least one lip (66) configured to be compressed against the edge of the front panel.

6. The seal (50A, 50B) according to one of the preceding claims, wherein the positioning base (52) comprises an anti-splash wall (68), which extends along the vertical axis (Z) from the tenon (56) away from the base (54), and which is configured to prevent water infiltration between the back panel (14) and the front panel (16), from the outside of the electrical cabinet (10) towards the channel (30), and wherein, preferably, the positioning base (52) has a fillet (70), formed between the anti-splash wall and the tenon.

7. The seal (50A, 50B) according to one of the preceding claims, wherein the seal is manufactured by injection moulding, and wherein, preferably, the seal is made of EPDM rubber.

8. The seal (50A, 50B) according to one of the preceding claims, wherein, measured perpendicularly to the width axis (X), the smallest thickness of the tenon is greater than or equal to 3 mm.

9. A double-panel electrical cabinet (10) comprising a enclosure (12), a back panel (14), a front panel (16) and two seals (50A, 50B) according to one of the preceding claims, wherein each seal (50A, 50B) seals a junction (J) between the enclosure, the back panel and the front panel.

10. The double-panel electrical cabinet (10) according to claim 9, wherein the base (54) of each seal (50A, 50B) is glued to the rabbet the rabbet (28) of the back panel (14), and wherein the groove (60) of each seal is glued to the notch (32) of the back panel.
